# EUROPÄISCHE PATENTANMELDUNG

(11) **EP 2 837 431 A1**
(43) Veröffentlichungstag der Anmeldung: **18.02.2015**
(21) Anmeldenummer: 13180457.7
(22) Anmeldetag: 14.08.2013
(51) Int. Cl.: B05C 17/00, B05B 1/34, B05C 5/02, E04F 21/165

(54) **Düsenelement zum Einbringen einer Flüssigkeit in eine Fuge sowie Verfahren zum Einbringen einer Flüssigkeit in eine Fuge**

(71) Anmelder: Sika Technology AG, 6340 Baar (CH)
(72) Erfinder: Buck, Manuel, 5412 Gebenstorf (CH)
(74) Vertreter: Sika Patent Attorneys

(57) **Zusammenfassung**

Die Erfindung betrifft ein Düsenelement zum Einbringen einer Flüssigkeit, insbesondere eines Kleb- und/oder Dichtstoffes, in eine Fuge, umfassend eine Austrittsöffnung (15), wobei mindestens ein kissenartig aufgewölbtes Abdeckelement (11) vorgesehen ist, das die Austrittsöffnung (15) zumindest abschnittsweise, insbesondere vollständig, umschließt derart, dass während des Einbringens an die Austrittsöffnung (15) angrenzende Bereiche der Fuge und/oder Fugenränder abgedeckt werden.

## Beschreibung

### Technisches Gebiet

Die Erfindung betrifft ein Düsenelement zum Einbringen einer Flüssigkeit in eine Fuge nach Anspruch 1, ein System umfassend ein Düsenelement und eine Fuge nach Anspruch 9, eine Verwendung eines Düsenelements nach Anspruch 11 sowie ein Verfahren zum Einbringen einer Flüssigkeit in eine Fuge nach Anspruch 12.

### Stand der Technik

Aus dem Stand der Technik sind bereits Düsenelemente zur Einbringung von gelförmigen und/oder pastösen Zusammensetzungen bekannt.

Weiterhin ist es bekannt, über derartige Düsenelemente beispielsweise Klebe- oder Dichtstoffe in eine Fuge zwischen zwei Bauteilen (z.B. Abdeckscheibe für einen Sonnenkollektor und einen Sonnenkollektorrahmen) einzubringen.

In diesem Zusammenhang wird es als nachteilhaft empfunden, dass überschüssiges Material der gelförmigen und/oder pastösen Zusammensetzung nach dem Einbringen der Zusammensetzung in die Fuge auf aufwändige Weise entfernt werden muss. Es wird beispielsweise vorgeschlagen, das überschüssige Material unter Zuhilfenahme einer Rakel zu entfernen. Dies führt zu einer vergleichsweise hohen Bearbeitungszeit und einen hohen gerätetechnischen und konstruktiven Aufwand.

Der Erfindung liegt die Aufgabe zu Grunde, ein Düsenelement zum Einbringen einer Flüssigkeit in eine Fuge sowie ein Verfahren zum Einbringen einer Flüssigkeit in eine Fuge vorzuschlagen, bei dem der herstellungs- und gerätetechnische Aufwand gegenüber dem Stand der Technik reduziert ist. Weiterhin sollen ein entsprechendes System aus einem Düsenelement und einer Fuge sowie eine entsprechende Verwendung eines Düsenelementes vorgeschlagen werden.

Diese Aufgabe wird durch ein Düsenelement gemäß Anspruch 1, ein System gemäß Anspruch 9, eine Verwendung gemäß Anspruch 11 sowie ein Verfahren gemäß Anspruch 12 gelöst.

Die Aufgabe wird insbesondere durch ein Düsenelement zum Einbringen einer Flüssigkeit, insbesondere eines Kleb- und/oder Dichtstoffes, in eine Fuge gelöst, wobei das Düsenelement eine Austrittsöffnung umfasst, wobei mindestens ein kissenartig aufgewölbtes Abdeckelement vorgesehen ist, das die Austrittsöffnung zumindest abschnittsweise, insbesondere vollständig, umschließt derart, dass während des Einbringens an die Austrittsöffnung angrenzende Bereiche der Fuge und/oder Fugenränder abgedeckt werden.

### Darstellung der Erfindung

Ein Kerngedanke der Erfindung liegt darin, dass die Austrittsöffnung durch ein kissenartig aufgewölbtes Abdeckelement (Kissenelement) umgeben wird (zumindest teilweise), so dass die Fuge bzw. Fugenränder zumindest in Abschnitten, die an die Austrittsöffnung (während des Einbringens der Flüssigkeit) angrenzen, abgedeckt werden. Dadurch wird bereits "online", also in einem Zug, Flüssigkeit eingebracht und das Austreten von überflüssiger Flüssigkeit verringert oder zumindest reduziert. Dadurch entfällt wiederum ein aufwändiges Entfernen von überflüssiger Flüssigkeit, so dass der gerätetechnische bzw. herstellungsmäßige Aufwand reduziert wird.

Unter einer Austrittsöffnung soll diejenige Öffnung des Düsenelementes verstanden werden, an der die Flüssigkeit austritt bzw. das Düsenelement verlässt. Bei der Flüssigkeit kann es sich insbesondere um gelartige und/oder pastöse Materialien handeln, insbesondere um Kleb- und/oder Dichtstoff.

Bevorzugt weist die Viskosität der Flüssigkeit einen Wert von 10³ - 2.5 x 10⁶ mPa * s, insbesondere 10⁴ - 2 x 10⁶ mPa * s, am meisten bevorzugt 10⁵ - 10⁶ mPa * s, gemessen nach DIN 53018, mittels einem Anton-Paar Rheometer (Physica MCR 101, Tegelplatte CP 25-1, Temperatur 23°C, Scherrate 0.5 sec⁻¹), auf.

Als Dicht- und/oder Klebstoff kommt beispielsweise ein Silikon-Dicht- und/oder -Klebstoff in Frage. Derartige Silikon-Dicht- und/oder -Klebstoffe werden besonders oft beim Abdichten von Fugen verwendet. Im Allgemeinen soll unter einer Flüssigkeit alles verstanden werden, was zumindest in einem Ausgangszustand (also in einem Zustand, bevor die "Flüssigkeit" das Düsenelement verlässt) fließfähig ist. Beispielsweise kann es sich bei der Flüssigkeit um ein Nass-Gel handeln, das erst in der Fuge trocknet und seine flüssige Komponente dort (zumindest teilweise) verliert. Unter einem "kissenartig aufgewölbten Abdeckelement" ist insbesondere ein Element zu verstehen, das unter Druck verformbar ist und in einen Ruhezustand (also ohne Druckeinwirkung) gegenüber den übrigen Komponenten des Düsenelementes vorsteht. In einer konkreten Ausführungsform wird die Austrittsöffnung durch das Abdeckelement definiert. Bei einer derartigen Ausführungsform umfasst das kissenartig aufgewölbte Abdeckelement (mindestens) eine Öffnung, die zugleich die Austrittsöffnung ist. Ein maximaler Durchmesser des Abdeckelementes kann mindestens 1,5mal, vorzugsweise 2mal, noch weiter vorzugsweise mindestens 4mal so groß sein wie ein maximaler Durchmesser der Austrittsöffnung. Dadurch wird sichergestellt, dass eine ausreichende Abdeckung der Fuge und/oder von Fugenrändern ermöglicht wird. Besonders bevorzugt richtet sich der (maximale) Durchmesser des Abdeckelements nach einer Tiefe der zu verfüllenden Fuge. Das Abdeckelement kann einen (maximalen) Durchmesser von (etwa) 40 mm bis 100 mm, insbesondere (etwa) 70 mm aufweisen. Die Austrittsöffnung kann einen (maximalen) Durchmesser von (etwa) 3 mm bis 7 mm, insbesondere (etwa) 5 mm aufweisen.

Vorzugsweise ist das Abdeckelement als Federelement ausgebildet oder umfasst ein solches. Ein Kerngedanke dieser Weiterbildung liegt darin, ein (reversibel) verformbares Abdeckelement bereitzustellen. Wenn ein derartiges Abdeckelement mit Fugenrändern in (Druck-) Kontakt kommt, schmiegt sich dieses an die Fugenränder an und verhindert wirkungsvoll eine Beschmutzung der Fugenränder. Unter einem "Fugenrand" soll ein an eine Fuge angrenzender Bereich der die Fuge definierenden Elemente (beispielsweise Abdeckscheibe eines Solarkollektors und Solarkollektorrahmen) ausbilden. Alternativ oder zusätzlich kann eine federnde Eigenschaft durch eine bestimmte Materialwahl bereitgestellt werden.

Vorzugsweise steht das mindestens eine Abdeckelement über die übrigen Komponenten (Elemente) des Düsenelementes vor.

In einer konkreten Ausführungsform ist ein (starres) Gehäuse vorgesehen. Das Gehäuse definiert vorzugsweise einen Aufnahmeraum für die Flüssigkeit, so dass die Flüssigkeit (von einer Zuführeinrichtung) zu der Austrittsöffnung geleitet werden kann. Das Gehäuse (die Flüssigkeitsaufnahmekammer) ist vorzugsweise aus Metall (zumindest teilweise). Besonders bevorzugt ragt das Abdeckelement von einem der Austrittsöffnung zugeordneten Ende des Gehäuses ab. Insbesondere wenn das Abdeckelement (elastisch-)verformbar ausgebildet ist, kann bei einer derartigen Ausführungsform durch die Einstellung der Distanz zwischen Gehäuse und Fugenrändern ein Anpressdruck des Abdeckelementes an die Fugenränder eingestellt werden. Vorzugsweise ist das Abdeckelement (teilweise) innerhalb des Gehäuses angeordnet bzw. wird durch das Gehäuse gehalten.

Das Abdeckelement ist vorzugsweise (zumindest abschnittsweise) aus einem ersten Material gebildet. Dieses erste Material hat vorzugsweise einen E-Modul von ≤ 30 MPa, weiter vorzugsweise ≤ 5 MPa, noch weiter vorzugsweise ≤ 1 MPa. Durch einen derartigen, vergleichsweise geringen E-Modul wird eine hohe Nachgiebigkeit des Abdeckelementes ermöglicht, so dass das Abdeckelement sich besonders effektiv an Fugenränder anschmiegen kann. Vorzugsweise befindet sich das erste Material in einem inneren Abschnitt des Abdeckelementes (also einem Abschnitt, der von der Austrittsöffnung entfernt ist).

Weiterhin kann ein zweites Material vorgesehen sein. Dieses zweite Material ist insbesondere an einer Oberfläche des Abdeckelementes ausgebildet, also in einem Bereich, der näher zu der Austrittsöffnung liegt bzw. nach außen weist. Besonders bevorzugt ist ein E-Modul des zweiten Materials 1,5mal, weiter vorzugsweise 3mal, noch weiter vorzugsweise 10mal so groß wie der E-Modul des ersten Materials. Konkret kann das E-Modul des zweiten Materials ≥ 100 MPa, vorzugsweise ≥ 1.000 MPa, noch weiter vorzugsweise ≥ 10.000 MPa sein. In einer konkreten Ausführungsform bildet das zweite Material eine Oberflächenschicht aus, die das erste Material abdeckt. Durch eine derartige Kombination wird einerseits eine hohe Elastizität des Abdeckelementes erreicht und dennoch (aufgrund des hohen E-Moduls des zweiten Materials) ein stabiles Abdeckelement realisiert, das sich insbesondere durch einen geringen Reibwiderstand des Düsenelementes (wenn das Düsenelement eine Fuge entlanggleitet) auszeichnet. Dadurch wird die Lebensdauer des Abdeckelementes und damit des Düsenelementes gesteigert. Besonders bevorzugt ist es in diesem Zusammenhang, wenn das zweite Material ein dichtes Material ist (also keine Poren aufweist) und das erste Material ein poröses Material (z.B. Schaumstoff, insbesondere Schaumkunststoff, wie sie beschreiben sind in CD Römpp Chemie Lexikon, Version 1.0, Georg Thieme Verlag, Stuttgart 1995). Bei einer derartigen Ausbildung wird einerseits verhindert, dass Flüssigkeit in das Abdeckelement eindringt und dennoch aufgrund der schaumstoffartigen Ausbildung des ersten Materials ein Kisseneffekt realisiert, so dass sich das Abdeckelement insgesamt vorteilhaft an Fugenränder anschmiegen kann.

Das erste (insbesondere im Inneren des Abdeckelementes angeordnete) Material des Abdeckelementes kann im Allgemeinen Schaumstoff sein, vorzugsweise aus Polyethylen bzw. auf Polyethylenbasis. Das zweite (insbesondere an der Oberfläche des Abdeckelementes angeordnete) Material des Abdeckelementes ist insbesondere ein Polymer, vorzugsweise ein Polymer mit einem hohen Molekulargewicht. Als derartiges Polymer kommt insbesondere hochmolekulargewichtiges Polyethylen oder ultra-hochmolekulargewichtiges Polyethylen in Frage. Unter einem hohen Molekulargewicht soll insbesondere ein Molekulargewicht von mindestens 500 kg/mol, vorzugsweise mindestens 1.000 kg/mol verstanden werden. Derartige hochmolekulargewichtige Polymere weisen eine vergleichsweise hohe Verschleiß- und Abriebfestigkeit sowie gute Gleiteigenschaften auf. Damit wird eine zuverlässige Abdeckung (bzw. Abdichtung) von Fugenrändern bei einer hohen Lebensdauer des Düsenelementes erreicht. In einer konkreten Ausführungsform ist das (an der Oberfläche des Abdeckelements angeordnete) Material des Abdeckelements Polytetrafluorethylen (PTFE). Das PTFE liegt vorzugsweise als Gittergewebe (Glasgewebe bzw. Glasgewebefolie) vor.

Ein die Oberfläche des Abdeckelementes zumindest abschnittsweise ausbildendes Material kann eine Shore-Härte D von ≥50, vorzugsweise ≥80, noch weiter vorzugsweise ≥90 (bei einer Temperatur von 30°C) aufweisen. Ein Reibungskoeffizient kann ≤0,4, vorzugsweise ≤0,3, noch weiter vorzugsweise ≤0,2 aufweisen. Unter "Reibungskoeffizient" soll der Reibungskoeffizient gemäß der zum Anmeldezeitpunkt geltenden deutschen Industrienorm (DIN) 53375 verstanden werden. Durch eine große Härte bzw. einen geringen Reibungskoeffizienten werden die Gleiteigenschaften des Abdeckelementes verbessert. Weiterhin wird insbesondere durch einen vergleichsweise geringen Reibungskoeffizienten ein Anhaften der Flüssigkeit an dem Abdeckelement verhindert oder zumindest reduziert. Weiterhin kann durch einen geringen Reibkoeffizienten das Düsenelement in verschiedene Richtungen verfahren werden, ohne dass es zu einem Ruckeln (aufgrund einer Richtungsänderung) kommt.

Das Abdeckelement ist in einer Ausführungsform konvex ausgebildet. Alternativ oder zusätzlich ist das Abdeckelement kreisringförmig. Bei einer derartigen Ausbildung kann auf einfache Weise eine zuverlässige Abdeckung (Abdichtung) von Fugenrändern realisiert werden. Vorzugsweise ist ein Querschnitt des Abdeckelementes kreisförmig. Dadurch wird eine Richtungsänderung beim Gleiten des Düsenelementes vereinfacht. Alternativ oder zusätzlich kann auch das Gehäuse (bzw. eine Flüssigkeitsaufnahmekammer) kreisförmig sein. Auch dies verbessert weiter die Wendigkeit (Fähigkeit zur Richtungsänderung) des Düsenelementes.

Die oben genannte Aufgabe wird weiterhin gelöst durch ein System umfassend das Düsenelement der oben beschriebenen Art und eine Fuge (bzw. zwei Elemente, die zwischen sich eine Fuge ausbilden, z. B. ein Insert (Glasscheibe) und ein Rahmen), wobei eine Oberfläche des Abdeckelementes eine höhere Härte (nach Mohs oder Shore D bei 23°C) und/oder einen geringeren Reibkoeffizienten als eine Oberfläche eines oder beider Fugenränder aufweist. Der Reibkoeffizient der Oberfläche des Abdeckelementes ist vorzugsweise mindestens 1,2, noch weiter vorzugsweise mindestens 1,5mal so hoch wie der Reibkoeffizient von einem oder von beiden Fugenrändern. Insgesamt wird durch eine derartige Einstellung der Härte bzw. der Reibkoeffizienten erreicht, dass ein abriebfestes Gleiten ermöglicht wird, ohne dass besonders hohe Kräfte aufgewendet werden müssen. Gleichzeitig wird die Mitnahme von Flüssigkeit durch das Düsenelement reduziert oder sogar gänzlich verhindert. Insgesamt wird auf einfache Weise eine saubere Ausfüllung der Fuge ermöglicht.

Ein maximaler Durchmesser der Austrittsöffnung ist vorzugsweise kleiner als eine maximale Breite der Fuge. Alternativ oder zusätzlich ist eine maximale Breite des Abdeckelementes vorzugsweise größer als ein maximaler Durchmesser der Fuge. Bei einer derartigen Ausbildung überdeckt das Abdeckelement sowohl Fugenränder, als auch (zumindest teilweise) die Fuge selbst. Dadurch wird besonders effektiv Flüssigkeit (z.B. Klebstoff) in die Fuge hineingedrückt, ohne dass Flüssigkeit nach außen dringen kann (zumindest ist dies deutlich reduziert). Die Fuge kann eine Breite von 3 bis 7 mm, insbesondere (etwa) 5 mm aufweisen.

Die Aufgabe wird weiterhin gelöst durch die Verwendung eines Düsenelementes der oben beschriebenen Art zum Einbringen einer Flüssigkeit in eine Fuge. Bezüglich der Vorteile wird auf die Ausführungen zum Düsenelement sowie zum System aus Düsenelement und Fuge verwiesen.

Weiterhin wird die Aufgabe gelöst durch ein Verfahren zum Einbringen einer Flüssigkeit in eine Fuge, umfassend die Schritte:
- Ausstoßen der Flüssigkeit durch eine Austrittsöffnung eines Düsenelementes, insbesondere der vorbeschriebenen Art, in Richtung Fuge;
- zumindest partielles Abdecken von an die Austrittsöffnung angrenzenden Bereichen der Fuge und/oder von Fugenrändern.

Der Schritt des Abdeckens findet insbesondere gleichzeitig mit dem Schritt des Ausstoßens der Flüssigkeit statt. Bezüglich der Vorteile wird auf die Ausführungen zum Düsenelement bzw. zum System aus Düsenelement und Fuge verwiesen.

Im Ergebnis kann durch die vorliegende Erfindung ein bestimmtes Volumen der Fuge auf einfache Weise beim Einbringen einer Flüssigkeit abgedichtet werden. Das Volumen kann von der Verfahrgeschwindigkeit der Düse bzw. von dem ausgebrachten Flüssigkeitsvolumen pro Zeiteinheit abhängen. Insgesamt wird ein Verhalten erreicht, das (zumindest beinahe) unabhängig ist von der Gleitrichtung der Düse. Dadurch ist ein Ausrichten der Düse in eine bestimmte Laufrichtung nicht weiter notwendig. Beispielsweise, wenn eine rechteckförmige Fuge gefüllt werden soll, kann auf eine Drehung der Düse im Bereich der Ecken verzichtet werden. Dadurch wird ein schnelles Wenden möglich.

Weitere Ausführungsformen ergeben sich aus den Unteransprüchen.

### Kurze Beschreibung der Zeichnungen

Nachfolgend wird die Erfindung auch hinsichtlich weiterer Merkmale und Vorteile anhand eines Ausführungsbeispiels beschrieben, das anhand der folgenden Abbildungen näher erläutert wird.

Hierbei zeigen:
- Fig. 1: eine schematische Schnittansicht eines Düsenelementes;
- Fig. 2: eine Schrägansicht des Düsenelementes gemäß Fig. 1; und
- Fig. 3: eine schematische Schnittansicht eines Düsenelements.

### Weg zur Ausführung der Erfindung

In der nachfolgenden Beschreibung werden für gleiche und gleich wirkende Teile dieselben Bezugsziffern verwendet.

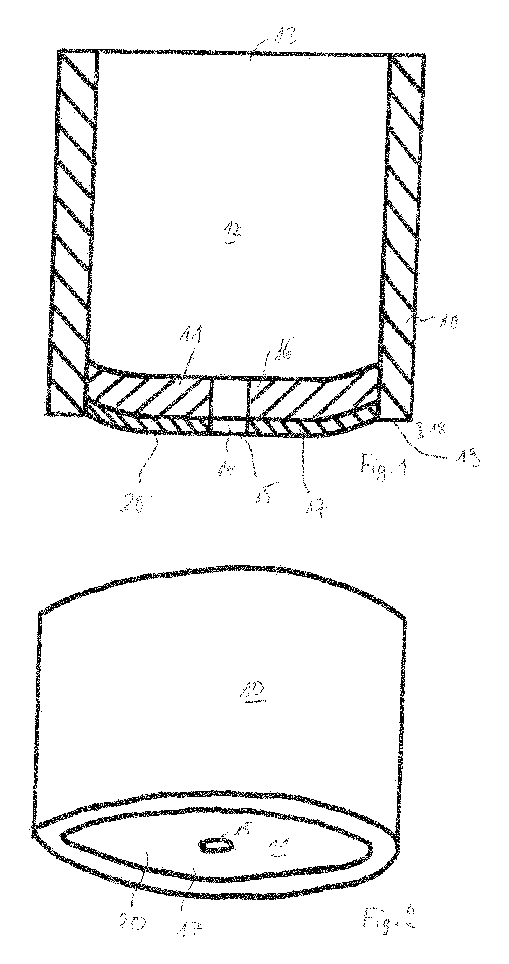

Das Düsenelement gemäß Fig. 1 und 2 umfasst ein Gehäuse 10 und ein Abdeckelement 11. Das Gehäuse 10 ist zylinderförmig ausgeformt und besteht aus einem Metall. Innerhalb des Gehäuses 10 befindet sich ein Flüssigkeitsaufnahmeraum 12, über den Flüssigkeit von einer (nicht im Detail dargestellten) durch das Bezugszeichen 13 angedeuteten Zuführeinrichtung in Richtung eines Flüssigkeitskanals 14 geführt wird, der sich innerhalb des Abdeckelementes 11 befindet. An einem distalen Ende des Flüssigkeitskanals 14 befindet sich eine Austrittsöffnung 15 (bzw. die Öffnung, aus der die Flüssigkeit austritt).

Das Abdeckelement 11 ist zweischichtig aufgebaut und umfasst eine erste Schicht 16 (innere Schicht) aus einem ersten Material und eine zweite Schicht 17 (aus einem zweiten Material). Die erste Schicht 16 ist (etwa) zwei- bis dreimal so dick wie die zweite Schicht 17. Das erste Material ist vorzugsweise Schaumstoff. Das zweite Material vorzugsweise ein Polymer (mit einem hohen Molekulargewicht). Durch die materialmäßige Ausbildung und die konvexe Struktur ist das Abdeckelement kissenartig nach außen gewölbt und steht um eine Distanz 18 von einem der Austrittsöffnung 15 zugeordneten Ende 19 des Gehäuses 10 von dem Gehäuse 10 vor. Die Distanz 18 kann beispielsweise (im Ruhezustand bzw. im Zustand, in dem kein Druck auf das Abdeckelement 11 einwirkt) mindestens 1 mm, weiterhin vorzugsweise mindestens 2 mm, noch weiter vorzugsweise mindestens 4 mm betragen. Die Obergrenze für die Distanz 18 ist vorzugsweise 8 mm, weiter vorzugsweise 6 mm. Das Abdeckelement 11 ist kreisringförmig ausgebildet.

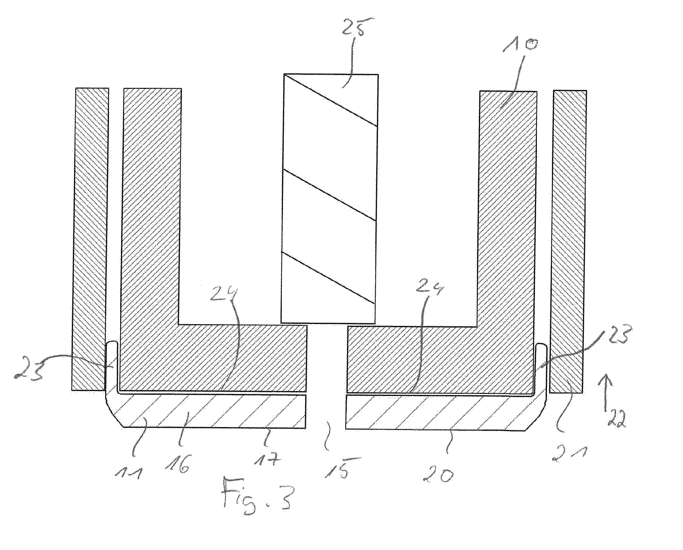

Über das Düsenelement kann eine Flüssigkeit (insbesondere Klebstoff) in eine (nicht dargestellte) Fuge eingebracht werden. Dabei befindet sich eine Oberfläche 20 des Abdeckelementes 11 (zumindest teilweise) in Kontakt mit Fugenrändern. Figur 3 zeigt eine alternative Ausgestaltung eines Düsenelements in einer schematischen Schnittansicht. Das Abdeckelement 11 in Figur 3 kann den in Bezug auf die Figuren 1 und 2 beschriebenen Aufbau aufweisen. Bei der zweiten (die Oberfläche 20 definierenden) Schicht 17 handelt es sich in der konkreten Ausführungsform um eine PTFE-Glasgewebefolie. Diese PTFE-Glasgewebefolie (bzw. allgemein die zweite Schicht 17) kann auf die erste Schicht 16 aufgeklebt sein. Die Dicke einer zwischen erster und zweiter Schicht liegenden Klebstoffschicht ist vorzugsweise 0,05 mm bis 0,2 mm. Bei der ersten Schicht 16 handelt es sich vorzugsweise um einen (Polyethylen-) Schaumstoff. Das Abdeckelement 11 ist auf das Gehäuse 10 aufgestülpt und so gehalten. Das Aufstülpen kann dadurch erfolgen, dass ein Ring 21 in Richtung eines Pfeils 22 (in Figur 3 von unten nach oben) auf das Gehäuse 10 zubewegt wird. Dadurch wird einerseits das Abdeckelement 11 über das Gehäuse gestülpt und andererseits ein distaler Randabschnitt 23 des Abdeckelements 11 zwischen Gehäuse 10 und Ring gequetscht. Der Ring 21 kann (muss aber nicht) kreisförmig ausgebildet sein. Im Bereich des distalen Randabschnitts 23 (im montierten bzw. gequetschten Zustand) hat das Abdeckelement 11 eine um mindestens den Faktor 3 (vorzugsweise um den Faktor 5) kleinere Dicke als in den übrigen Bereichen. Dadurch wird das Abdeckelement 11 zuverlässig am Gehäuse 10 gehalten. Weiterhin kann das Abdeckelement 11 mit dem Gehäuse 10 verklebt sein (beispielsweise an einem Frontabschnitt 24 des Gehäuses 10). Auch hier weist eine Klebstoffschicht vorzugsweise eine Dicke von 0,05 mm bis 0,2 mm auf.

Mit dem Bezugszeichen 25 ist noch ein (optionaler), vorzugsweise statischer, Mischer angedeutet. Ein derartiger (statischer) Mischer ist beispielsweise dann von Vorteil, wenn ein Zweikomponentenkleb- und/oder -dichtstoff zum Einsatz kommt.

Das Abdeckelement 11 kann im (gequetschten) Randbereich 23 eine Dicke von 0,5 mm bis 1,5 mm, konkret 1 mm aufweisen. In den übrigen Bereichen (bzw. im nicht-gequetschten Zustand) kann das Abdeckelement eine Dicke von 3 mm bis 7 mm, vorzugsweise 5 mm aufweisen.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Gehäuse
- 11: Abdeckelement
- 12: Flüssigkeitsaufnahmeraum
- 13: Zuführeinrichtung
- 14: Flüssigkeitskanal
- 15: Austrittsöffnung
- 16: Erste Schicht
- 17: Zweite Schicht
- 18: Distanz
- 19: Ende
- 20: Oberfläche
- 21: Ring
- 22: Pfeil
- 23: Randabschnitt
- 24: Frontabschnitt

## Patentansprüche

1. Düsenelement zum Einbringen einer Flüssigkeit, insbesondere eines Kleb- und/oder Dichtstoffes, in eine Fuge, umfassend eine Austrittsöffnung (15),
**dadurch gekennzeichnet, dass**
mindestens ein kissenartig aufgewölbtes Abdeckelement (11) vorgesehen ist, das die Austrittsöffnung (15) zumindest abschnittsweise, insbesondere vollständig, umschließt derart, dass während des Einbringens an die Austrittsöffnung (15) angrenzende Bereiche der Fuge und/oder Fugenränder abgedeckt werden.

2. Düsenelement nach Anspruch 1,
**dadurch gekennzeichnet, dass**
das Abdeckelement (11) als Federelement ausgebildet ist oder ein solches umfasst.

3. Düsenelement nach Anspruch 1 oder 2,
**dadurch gekennzeichnet, dass**
das mindestens eine Abdeckelement (11) von den übrigen Komponenten des Düsenelementes vorsteht.

4. Düsenelement nach einem der vorhergehenden Ansprüche,
**dadurch gekennzeichnet, dass**
ein, insbesondere starres, Gehäuse vorgesehen ist, wobei vorzugsweise von dessen der Austrittsöffnung zugeordnetem Ende (19) mindestens ein Abdeckelement (11) abragt.

5. Düsenelement nach einem der vorhergehenden Ansprüche,
**dadurch gekennzeichnet, dass**
das Abdeckelement (11) mindestens abschnittsweise aus einem ersten Material gebildet ist, das vorzugsweise einen E-Modul von ≤ 30 MPa, vorzugsweise ≤ 5 MPa, noch weiter vorzugsweise ≤ 1 MPa aufweist und/oder
zumindest abschnittsweise, insbesondere an seiner Oberfläche, aus einem zweiten Material gebildet ist, das vorzugsweise einen, um mindestens 1,5, vorzugsweise um mindestens 3, noch weiter vorzugsweise um mindestens 10mal, höheren E-Modul aufweist als das erste Material und/oder einen E-Modul von ≥ 100 MPa, vorzugsweise ≥ 1.000 MPa, noch weiter vorzugsweise ≥ 10.000 MPa aufweist.

6. Düsenelement nach einem der vorhergehenden Ansprüche, insbesondere nach Anspruch 4 oder 5,
**dadurch gekennzeichnet, dass**
ein erstes, insbesondere im Inneren des Abdeckelementes (11) angeordnetes, Material des Abdeckelements (11) ein Schaumstoff ist und/oder ein zweites, insbesondere an der Oberfläche des Abdeckelementes (11) angeordnetes, Material des Abdeckelementes, ein Polymer, insbesondere ein Polymer mit hohem Molekulargewicht ist.

7. Düsenelement nach einem der vorhergehenden Ansprüche,
**dadurch gekennzeichnet, dass**
ein die Oberfläche (20) des Abdeckelementes (11) zumindest abschnittsweise ausbildendes Material eine Shore-Härte D von ≥ 50, vorzugsweise ≥ 80, noch weiter vorzugsweise ≥ 90 aufweist und/oder einen Reibungskoeffizienten von ≤ 0,4, vorzugsweise ≤ 0,3, noch weiter vorzugsweise ≤ 0,2, noch weiter vorzugsweise ≤ 0,1 aufweist.

8. Düsenelement nach einem der vorhergehenden Ansprüche,
**dadurch gekennzeichnet, dass**
das Abdeckelement (11) konvex ausgebildet ist und/oder dass das Abdeckelement (11) kreisringförmig ist und/oder dass ein Querschnitt des Gehäuses (10) und/oder einer Flüssigkeitsaufnahmekammer kreisförmig ist.

9. System umfassend das Düsenelement nach einem der vorhergehenden Ansprüche und die Fuge, wobei eine Oberfläche (20) des Abdeckelementes (11) eine höhere Härte aufweist als eine Oberfläche von Fugenrändern und/oder einen geringeren Reibkoeffizienten aufweist.

10. System nach Anspruch 9,
**dadurch gekennzeichnet, dass**
ein maximaler Durchmesser der Austrittsöffnung (15) kleiner ist als eine maximale Breite der Fuge und/oder
**dadurch gekennzeichnet, dass**
ein maximaler Durchmesser des Abdeckelementes (11) größer ist als eine maximale Breite der Fuge.

11. Verwendung eines Düsenelementes nach einem der Ansprüche 1-8 zum Einbringen einer Flüssigkeit, insbesondere eines Kleb- und/oder Dichtstoffes, vorzugsweise für das System nach Anspruch 9 oder 10, in eine Fuge.

12. Verfahren zum Einbringen einer Flüssigkeit, insbesondere eines Kleb- und/oder Dichtstoffes, vorzugsweise unter Verwendung des Düsenelements gemäß einem der Ansprüche 1-8, in eine Fuge, umfassend die Schritte:
- Ausstoßen der Flüssigkeit durch eine Austrittsöffnung (15), insbesondere eines Düsenelementes nach einem der Ansprüche 1-8 und/oder eines Systems nach Anspruch 9 oder 10, in Richtung der Fuge; und
- zumindest partielles Abdecken von an die Austrittsöffnung (15) angrenzenden Bereichen der Fuge und/oder von Fugenrändern.
